# EUROPEAN PATENT SPECIFICATION

(11) **EP 3 781 387 B1**
(45) Date of publication and mention of the grant of the patent: **05.10.2022**
(21) Application number: 19721861.3
(22) Date of filing: 29.03.2019
(51) Int. Cl.: B29C 65/00, B62D 29/04, B62D 27/02, B62D 23/00, B29C 65/76, B29C 64/00

(54) **PROCESS AND PLANT FOR PRODUCING A MODULAR STRUCTURE, IN PARTICULAR A CHASSIS FOR MOTOR VEHICLES AND A MODULE FOR SUCH CHASSIS**
VERFAHREN UND ANLAGE ZUR HERSTELLUNG EINER MODULAREN STRUKTUR, INSBESONDERE EINES FAHRGESTELLS FÜR KRAFTFAHRZEUGE UND MODUL FÜR EIN SOLCHES FAHRGESTELL
PROCÉDÉ ET INSTALLATION DE PRODUCTION D'UNE STRUCTURE MODULAIRE, EN PARTICULIER D'UN CHÂSSIS POUR VÉHICULES AUTOMOBILES ET MODULE POUR UN TEL CHÂSSIS

(30) Priority: 19.04.2018 IT 201800004711; 19.04.2018 IT 201800004712
(43) Date of publication of application: 24.02.2021
(73) Proprietor: Mancini, Gianni, 10141 Torino (IT)
(72) Inventor: Mancini, Gianni, 10141 Torino (IT)
(74) Representative: Garavelli, Paolo
(86) International application number: PCT/IT2019/000026
(87) International publication number: WO 2019/202619

(56) References cited:
- WO-A1-2016/003982
- US-A- 5 272 805
- US-A1- 2008 169 685

## Description

The present invention refers to a process and a plant for producing a modular structure, in particular a chassis for motor vehicles and a module for such chassis.

More in particular, the invention refers to a process and a plant for producing modules for a chassis or for a portion of chassis for motor vehicles made through 3D printing.

Still in particular, the invention refers to modules for a chassis or for a portion of chassis for motor vehicles made through 3D printing. Herein below, the term chassis will designate both a complete chassis and a portion of chassis, for example designed to be fastened to a chassis made of carbon fibre.

Processes and plants are known for producing chassis for motor vehicles made through metal components (mainly steel and/or aluminium), first moulded and then electro-welded.

These first known chassis, however, have the problem that the high safety levels (crash test) reached thereby can be improved with difficulty in a meaningful way without burdening the vehicle mass.

This problem is solved by chassis for motor vehicles made of composite materials, like shells called CFRP (Carbon Fibre Reinforced Polymer), or in a lesser way by chassis made of a mix of materials comprising steel and aluminium alloys, like the shells called "space frame", which guarantee high performances in terms of torsion stiffness and resistance to front and side impacts, even having a reduced weight.

These other known chassis, mainly the CFRP ones, however have the problem of a high production cost due to the complex manufacturing process, so that they are currently used only for particular uses (very high range motor vehicles and Motorsports).

The need of making light-weight chassis for motor vehicles is given above all by the fact that in electric motor vehicles which, together with the hybrid ones, are in perspective a more and more important portion in worldwide circulating vehicles, the weight of the batteries imposes a sure and scarcely reducible increase of the mass, unless very low autonomy levels are accepted. Therefore, with the same work-load being transported and the same dynamic performances, a plus equal to about 25/35% of incremental weight is assigned with respect to vehicles equipped with endothermal motors.

The prior art is given by documents US-A1-2017/050677, EP-A1-3 263 237, US-A1-2008/169685, WO-A1-2016/003982 and US-A-5 272 805.

Object of the present invention is solving the above prior art problems, by providing a process and a plant for producing a chassis for motor vehicles and a module for such chassis which guarantee:
- competitive production costs and investments to start a new model with respect to currently used technologies used in medium/large series;
- flexibility, with the chance of modifying vehicle sizes/characteristics without having to pay the high investments required by the need of new dies and with the chance of following technologic evolutions of batteries with smaller and smaller overall sizes, in favour of the increase of load volumes;
- strongly reduced prototyping and industrializing times with respect to those of production processes currently adopted by the majority of shell manufacturers, and therefore quickness from the point of view of the Time to Market.

The above and other objects and advantages of the invention, as will result from the following description, are obtained with a chassis for motor vehicles and a module for such chassis as claimed in the independent claims. Preferred embodiments and non-trivial variations of the present invention are the subject matter of the dependent claims.

It is intended that all enclosed claims are an integral part of the present description.

The present invention will be better described by a preferred embodiment, provided as a nonlimiting example, with reference to the enclosed drawings, in which:

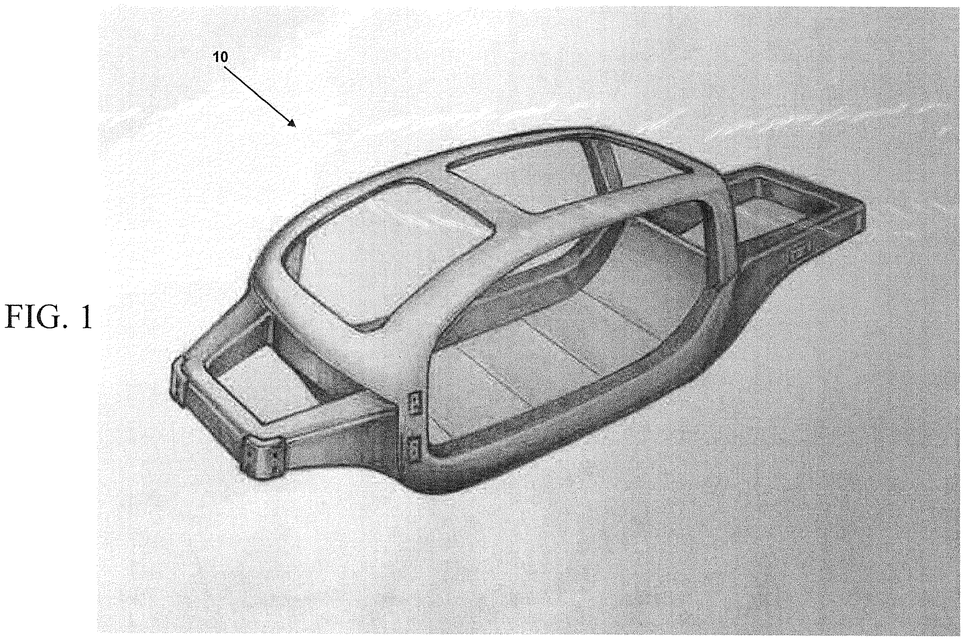

- Figure 1 shows a perspective view of a chassis according to the present invention;

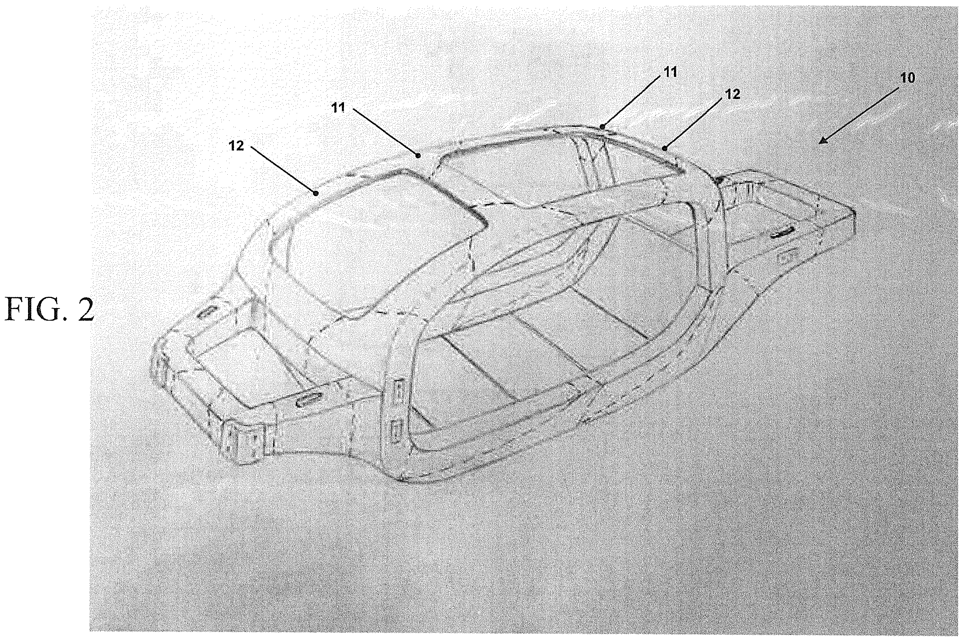

- Figure 2 shows a perspective view pointing out the modules of a chassis according to the present invention;

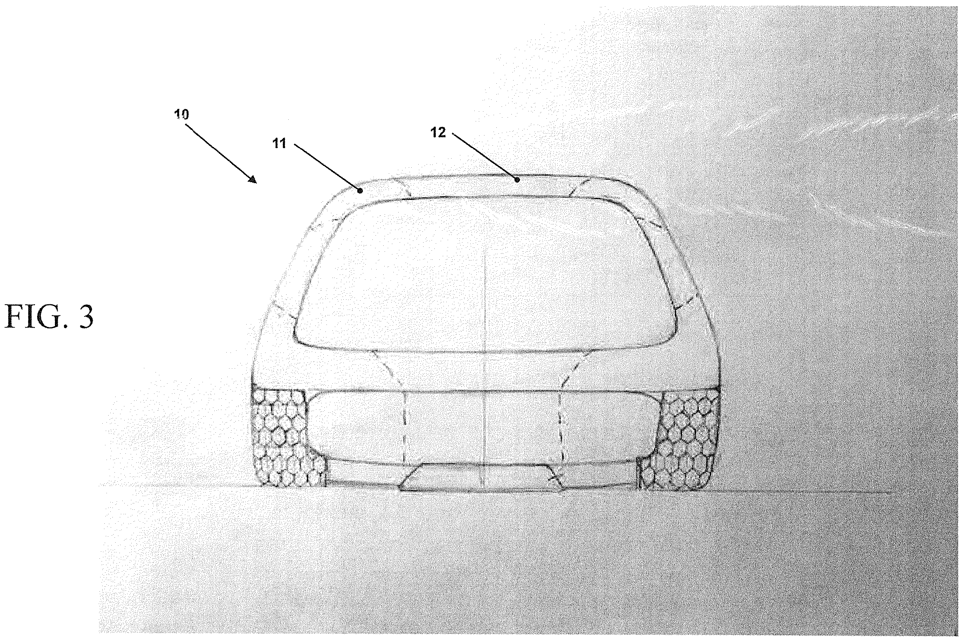

- Figure 3 shows a front view of a chassis according to the present invention;

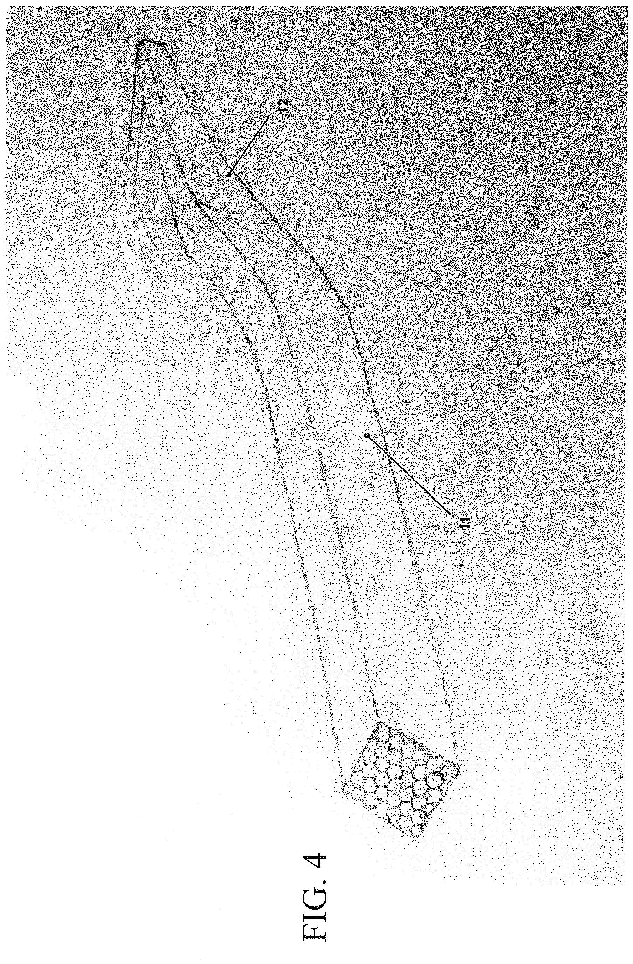

- Figure 4 shows a perspective view of two modules of a chassis according to the present invention;
- Figure 5.1 shows a perspective view and a side view of an embodiment of two modules of a chassis according to the present invention;
- Figure 5.2 shows a perspective view and a side view of an embodiment of two modules of a chassis according to the present invention;
- Figure 5.3 shows a perspective view and a side view of an embodiment of two modules of a chassis according to the present invention;
- Figure 5.4 shows a perspective view and a side view of an embodiment of two modules of a chassis according to the present invention; and

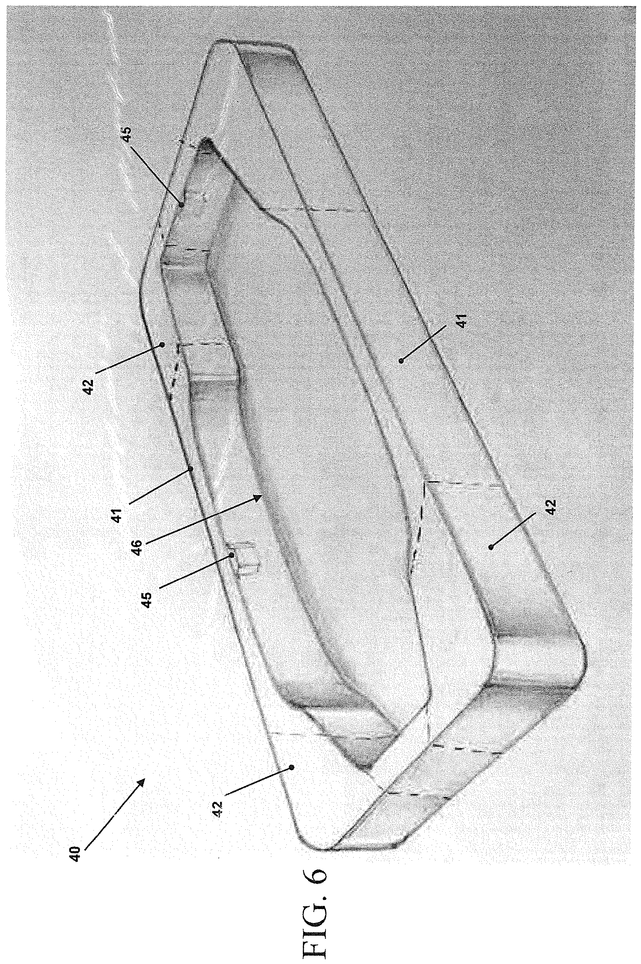

- Figure 6 shows a perspective view of a tank for assembling a chassis according to the present invention.

With reference to the Figures, the chassis 10 for motor vehicles of the invention comprises at least one first module 11 and at least one second module 12, the first module 11 having a face with at least one first surface 15 complementary with a second surface 16 of a face of the second module 12, the first and second surfaces respectively comprising first 25 and second 26 interlocking elements, designed to be mutually interlocked to fasten the first module 11 and the second module 12, with the first surface 15 and the second surface 16 mutually abutted.

In a preferred way, the first surface 15 and the second surface 16 have the same shape and are mutually matching, at least partially, when the first module 11 is fastened to the second module 12, with the first 25 and the second 26 interlocking elements mutually interlocked.

Preferably, the chassis 10 for motor vehicles of the invention comprises a plurality of the first modules 11, and a plurality of the second modules 12, each of the first modules 11 having a face with a first surface 15 complementary with a second surface 16 of a face of at least one of the second modules 12, the first and second surfaces respectively comprising the first 25 and the second 26 interlocking elements, designed to be mutually interlocked to fasten the first module 11 and the second module 12, with the first surface 15 and the second surface 16 mutually abutted, in a preferred way at least partially matching.

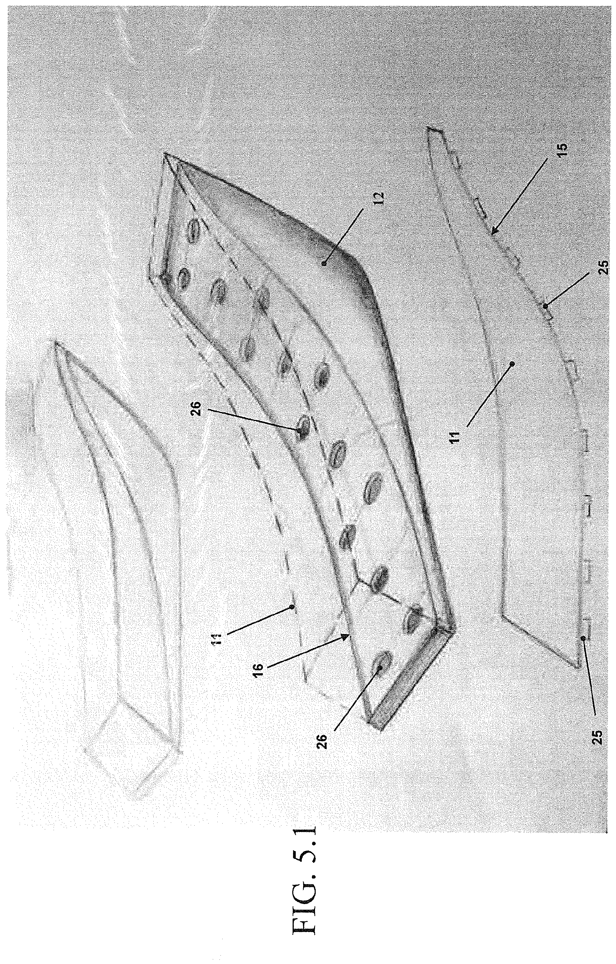

In a first embodiment of the modules 11, 12 for the chassis 10 for motor vehicles of the invention shown in Figure 5.1, the first 25 and the second 26 interlocking elements are made with projecting elements and corresponding recesses made respectively on the first surface 15 and on the second surface 16 of the modules 11 and 12, the projecting elements and recesses having for example a circular or polygonal profile. For example, the first elements 25 have slightly convex surfaces to obtain a forced interlocking with the second elements 26; preferably, the second elements 26 have slightly convex surfaces, to increase the interference between the first 25 and the second 26 elements.

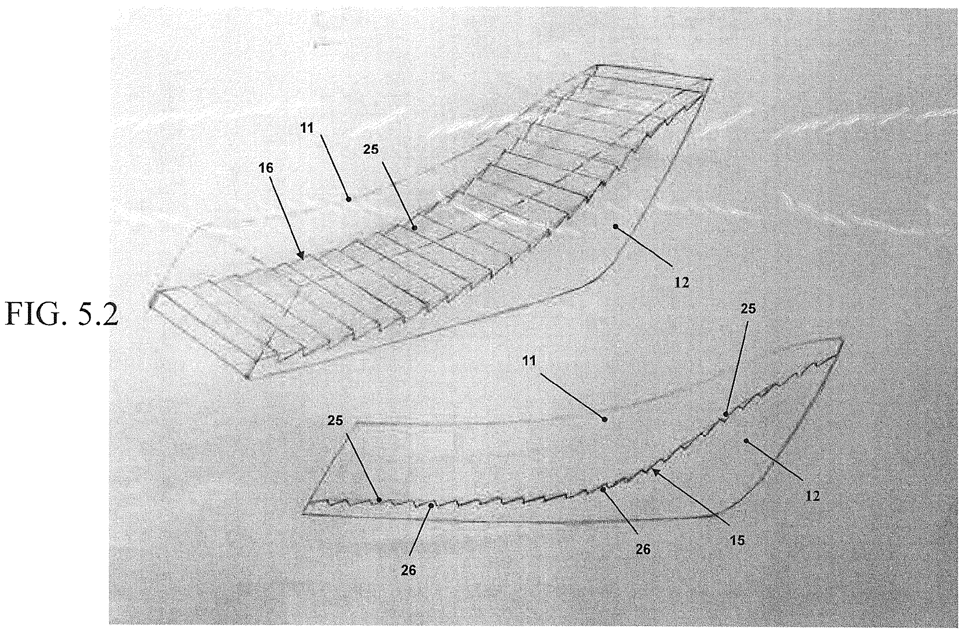

In a second embodiment of the modules 11, 12 for the chassis 10 for motor vehicles of the invention shown in Figure 5.2, the first 25 and the second 26 interlocking elements are made with projecting elements and corresponding recesses made respectively on the first surface 15 and on the second surface 16 of the modules 11 and 12, the projecting elements and recesses having a saw-teeth profile.

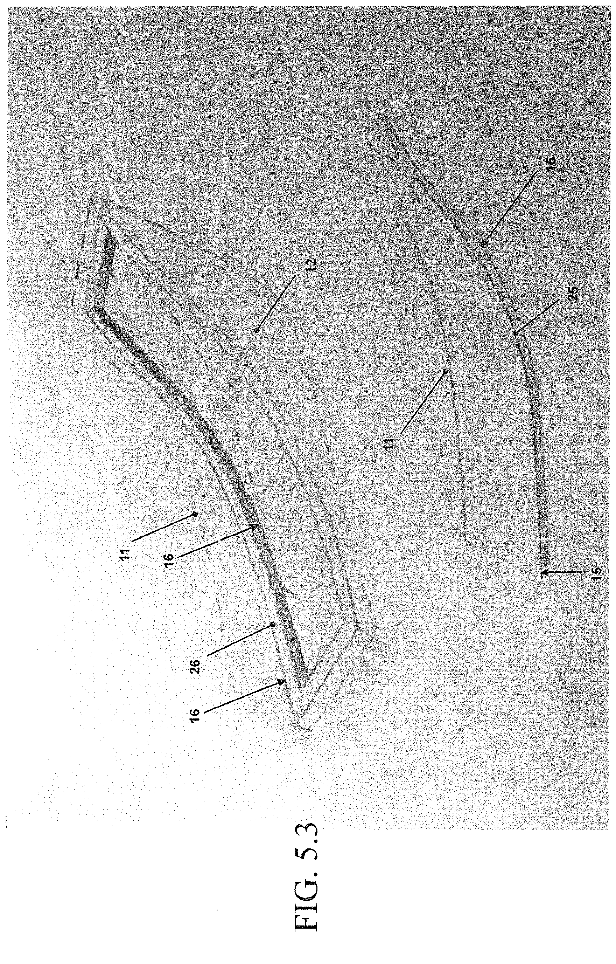

In a third embodiment of the modules 11, 12 for the chassis 10 for motor vehicles of the invention shown in Figure 5.3, the first 25 and the second 26 interlocking elements are made with projecting elements and corresponding recesses made respectively on the first surface 15 and on the second surface 16 of the modules 11 and 12, the projecting elements being composed of a projecting edge and the corresponding recesses being composed of a central recessed part.

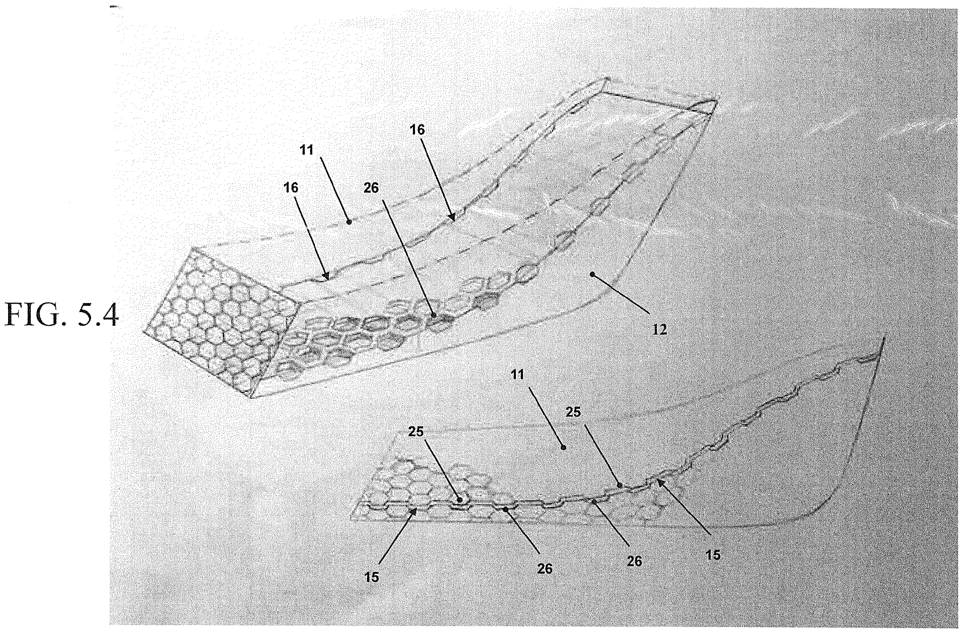

In a fourth embodiment of the modules 11, 12 for the chassis 10 for motor vehicles of the invention shown in Figure 5.4, the first 25 and the second 26 interlocking elements are made with projecting elements and corresponding recesses made respectively on the first surface 15 and on the second surface 16 of the modules 11 and 12, the projecting elements and recesses having for example a honeycomb profile, for example hexagonal.

Obviously, other embodiments are possible with interlocking elements 25, 26 of a known type, for example known elements composed of surface peduncles made on the surface of the modules 11, 12 and designed to be mutuallly interconnected.

Preferably, the modules 11, 12 of the chassis 10 for motor vehicles are made by using a combination of pairs of first 25 and second 26 interlocking elements of a different type.

In a preferred way, the first 25 and the second 26 interlocking elements are made on a lateral longitudinal surface of the module 11, 12 for the chassis 10 for motor vehicles.

Another way of interlocking could be also possible, where a module has its two sides different one from the other, in order to interlock in a way in the first side (for example, with the element adjacent to the left or bottom) and in a different way in the second side (for example, with the other element adjacent to the right or top).

In order to obtain a final structure of the chassis 10, which is monolithic and extremely rigid (at torsional and flexural levels), it is finally necessary to glue the first 25 and the second 26 interlocking elements and/or the first surface 15 and on the second surface 16 of the modules 11 and 12, through spreading with gluing substances of a known type, arranged on the surfaces to be joined immediately before assembling the modules 11 and 12.

Preferably, the gluing substance between the modules 11 and 12 is consolidated/reticulated through a heating operation of the structure with a suitable heating system of a known type.

The modules 11, 12 are designed to be assembled in an assembling tank 40, which will be explained below more in detail, and are made through 3D moulding, preferably through a battery of 3D printers, each one of which can work, if necessary, with a different material with respect to another one; for example, the modules 11, 12 are made of powder or filaments of nylon, CF, titanium, fiberglass, Kevlar, polyurethane, ABS reinforced with CF (chopped carbon), Scalmalloy, and in general materials of a known type for 3D printing.

For example, for a motor vehicle having average sizes (length of 4.2-4.6 m; width of 1.7-1.9 m; height of 1.5-1.7 m) and an average displacement (1.6 - 2.2 litres), chassis 10 composed of 40-80 modules 11, 12 can be assumed.

Since the majority of motor vehicles has a longitudinal plane of symmetry (as regards the structure of the vehicle chassis), it can be devised that the number of modules 11, 12 really and suitably different (in terms of composing materials and morphology) will be reduced to about half with respect to the above mentioned number.

The production plant of the chassis 10 for motor vehicles of the invention comprises, in a preferred way:
- at least one 3D printer for printing the modules 11, 12 of the chassis for motor vehicles;
- the tank 40 for assembling/containing the modules 11, 12 to be fastened, having an internal surface 46 designed to be coupled with the surface of the modules 11, 12 when they are fastened, mutually interlocked to make the chassis 10; the tank 40 will be a sort of cradle/seat inside which the chassis 10 is assembled, preferably automatically. The tank can in turn be preferably made of plastic material through 3D-moulded modules 41, 42 which are then assembled, with their division completely different from that of the chassis 10.

In a preferred way, "n" tanks 40 are provided for every type of chassis 10 to be mass-produced, depending on the parallelization of production flows, and therefore depending on the production volumes which have to be supported for such specific chassis.

The tank comprises (always made through 3D printing) fastening systems 45 to guarantee that at least the first module 11, 12 arranged on every side of the tank 40 (and therefore of the chassis 10 when manufacturing) can be fastened to the tank 40. For other modules 11, 12 of the chassis 10, fasteners to the tank 40 will presumably not be necessary, since the interlocking with the nearby modules 11, 12 already inserted (and fastened to the tank 40) will guarantee that each module 11, 12 is kept in the correct position. The fasteners 45 will then anyway allow, at the end of the assembling step, the disengagement of the finished chassis 10 from the preparation tank 40 (optionally the chassis 10 will in turn have hooks embedded for example in its four angles at the ends, to be able to be slung by a catching and lifting system made for such purpose; preferably, the tank 40 comprises a belting and blocking system of the modules 41, 42 composing the tank 40, to prevent them from going away during the chassis pressing step, described below more in detail.

At least one first automatic sub-station is also provided, comprising preparing/dosing and distributing means of a gluing substance, for distributing a pre-dosed amount of the gluing substance on the interlocking elements 25, 26 and/or on the surfaces 15, 16 of the modules 11, 12 to be fastened; preferably, the automatic sub-station comprises a pre-heating system for the gluing substance, for example through UV rays.

An automatic system is further provided, comprising pressing means, designed to keep pressed the surfaces 15, 16 of the modules 11, 12 to be fastened.

The following items are further provided:
- a second sub-station comprising heating means of a known type, for heating/reticulating the gluing substance;
- handling means of the modules 11, 12, for example a robot equipped with holding clamp;
- handling means of the assembling tank 40, for example known systems of the AGV type;
- handling means of the chassis, for example a tackle/manipulator.

The process for producing the chassis 10 for motor vehicles of the invention preferably comprises the following steps:
- a first step of 3D molding the modules 11, 12 of the chassis for motor vehicles, through at least one 3D printer, preferably with a battery of 3D printers;
- a second step of cleaning and surface finishing the modules 11, 12, to remove burrs and residues from the molded pieces;
- a third optional step of positioning, through an automated system, the modules 11, 12 of the chassis in corresponding storage trays, so that the modules 11, 12 are suitably oriented for a following step of catching the modules 11, 12 through handling means;
- a fourth step of withdrawing, preferably from the storage tray of the modules 11, 12 and of transferring the modules 11, 12 by the preparing/dosing and distributing sub-station of the gluing substance, through handling means of the modules 11, 12, for example robots equipped with holding clamp;
- a fifth step of distributing the pre-dosed amount of the gluing substance on the interlocking elements 25, 26 and/or on the surfaces 15, 16 of the modules 11, 12 to be fastened, through preparing/dosing and . distributing means of the gluing substance;
- a sixth step of recognizing and of transferring the modules 11, 12 in the respective position inside the assembling tank 40, through recognizing means and handling means of the modules 11, 12, for example robots;
- a seventh step of fastening some modules 11, 12 to the assembling tank 40, by means of a simplified fastening system integrated in the tank 40;
- an eighth step of pressing/consolidating the modules 11, 12 to be fastened, through the automatic system comprising pressing means designed to keep pressed the surfaces 15, 16 of the modules 11, 12 to be fastened, so that the respective interlocking elements 25, 26 and/or surfaces 15, 16 mutually adhere, for example for a time of about 10 s and with an adequate pressure, by stably gluing themselves;
- a ninth optional step of handling the assembling tank 40 with the complete chassis for vehicles with every sub-part thereof towards the heating/reticulating station of the gluing substance, through the handling means of the assembling tank 40, for example through known systems of the AGV type;
- a tenth optional step of heating the chassis for motor vehicles, for example for a time from 10' to 30' and at a temperature included between 70° and 130°C;
- an eleventh step of fastening the fastening points of the four angular modules of the chassis for motor vehicles through handling means of the chassis, for example a hoist/manipulator, in order to detach the chassis for motor vehicles from the assembling tank 40;
- a twelfth step of positioning of the chassis on a trolley/tray, through the handling means of the chassis, for example a hoist/manipulator;
- a thirteenth step of re-positioning the assembling tank 40, through handling means of the tank 40, for example through known systems of the AGV type.

Advantageously, the process for producing the chassis 10 for motor vehicles of the invention allows having a WIP (Work In Progress) of this working reduced to a minimum, and allows having a JIT (Just In Time) production of what is necessary, when it is necessary, in a straightforward and integrated way.

Due to the adoption of 3D printing technologies (together with a robotization of the other operations), a very high flexibility level can be obtained for the production lines of motor vehicles chassis, so that a really customized vehicle can be produced at competitive costs, even produced at will for the needs of a specific end customer, thing which nowwdays is made possible only for prototypes or very costly vehicles.

The present invention, as described above, can also provide for some improvements/integrations.

As regards the product:
1. instead of simple interlocking, it can be possible to devise actual joints as interconnecting items between the chassis elements: for example, through "key/lock" arrangements, where the element with a male end is interlocked with the element with female end through a traslation-rotation of the robot axle when assembling the two elements (or by manual operation). Another variation can be composed of a sort of tapered joint (always with female on one side and male on another), with a slight geometric interference of the elements, which can be obtained for example by drawing the tapered male element with a series (minimum one) of flexible tongues (always obtained with a 3D printing in order to be integral with the vertex end of the cone itself) so that their elasticity can be won by a pressure suitably exerted axially by the robot during the assembling stroke of the elements themselves (or by manual operation): when the axial pressure of the robots stops, after a small rotation, the tongues will have been elastically engaged in the suitable recesses (obtained in the production step in the end of the female element), generating a very strong locking of the interconnection. It is clear that this solution can be made feasible only through the use of elastic enough materials (metallic or thermoplastic or composite materials) such as to allow making flexible tongues as described above (obviously, to be able to build what is described with a 3D printing, the material of the tongues must be the same as that of the cone carrying the tongues).
2. This type of interconnection systems, together with the use of adhesives, can be, for particular areas of the chassis (particularly stressed during use and characterized by restricted sections, for example the pillars of the roof), a factor conferring a higher resistance to the normal interlocking already previously mentioned.

As regards the process:
1. the production speed can be increased up to four times by using up to four robots which work simultaneously on the four sides of the tank: by so doing (obviously in addition to increasing the number of 3D printers, the distributing units of the adhesives and the possible final ovens).
2. It is also possible to make a tank in reverse with respect to what has been described previously: namely, starting to assemble first on the bottom of the tank the upper part of the chassis, then the whole lateral/perimeter structure, and finally the lower part, namely the vehicle floor. Clearly, this tank would be equal in length and width to the other one, but much deeper. At the end of the assembling, the chassis will obviously have to be overturned. The advantage consists in that there would be more contrast in positioning the upper elements, obviously less for the lower elements: depending on the vehicle, one solution or the other could be convenient.
3. Possibility of conferring to the tank supplementary degrees of freedom (vertical / lateral movement and rotations on the three axes) in order to optimize the work efficiency of the robots (or the manual operations), reducing to a minimum the risk of mutual interference.
4. Possibility of inserting thin sensors (with integrated batteries) to monitor micro-movements of the glued elements (this could be a 4D printing: namely 3D + an dynamic function, that continuously checks over time the solidity and the stability of the structure). The sensors could be glued at the end of the assembling in the points of the chassis presumably more stressed astride contiguous elements to evaluate their relative micro-movements. These sensors (if equipped with alarm) can interact with the driver (or the autonomous drive) to limit the vehicle (speed/max, maximum weight, linear and centrifugal acceleration, etc.) in order to contain it within the structural safety limits.
5. An assembling process can also be devised which uses two tanks in parallel (and therefore simultaneously producing): one for the upper chassis and one for the lower chassis, with an additional final assembling operation of the two macro-portions of chassis which would be joined with the external support of the lower tank only, after having discharged the upper chassis from its tank. This can allow optimizing the contrast reaction when assembling both portions of chassis and therefore a structurally optimum result, above all in case or particularly complex chassis (e.g.: it could be the case of SUV vehicles chassis).
6. Another variation could be the use of welding instead of gluing, obviously only for those chassis materials which allow such welding operation.

## Claims

1. Process for producing a modular structure (10) comprising the following steps:
- a first step of 3D molding the modules (11, 12) of the structure (10), through at least one 3D printer;
- a second step of cleaning and surface finishing the modules (11, 12), to remove burrs and residues from the molded pieces;
- a third step of withdrawing the modules (11, 12) and of transferring them to a preparing/dosing and distributing sub-station of a gluing substance, through handling means of the modules (11, 12);
- a fourth step of distributing the gluing substance on interlocking elements (25, 26) and/or on surfaces (15, 16) of the modules (11, 12) to be fastened, through preparing/dosing and distributing means of the gluing substance, the modules (11, 12) to be fastened comprising at least one first module (11) and at least one second module (12), the first module (11) having a face with at least one first surface (15) complementary with a second surface (16) of a face of the second module (12), the first and second surfaces respectively comprising first interlocking elements (25) and second interlocking elements (26), designed to be mutually interlocked to fasten the first module (11) and the second module (12), with the first surface (15) and the second surface (16) mutually abutted;
- a fifth step of recognizing and of transferring the modules (11, 12) in the respective position inside an assembling tank (40), through recognizing means and handling means of the modules (11, 12);
- a sixth step of fastening the modules (11, 12) to the assembling tank (40), by means of a fastening system;
- a seventh step of pressing/consolidating the modules (11, 12) to be fastened, through pressing means designed to keep pressed the surfaces (15, 16) of the modules (11, 12) to be fastened, so that the respective interlocking elements (25, 26) and/or surfaces (15, 16) mutually adhere by stably gluing themselves;
- an optional eighth step of heating the modular structure (10) for heating/reticulating the gluing substance;
- a ninth step of detaching the modular structure (10) from the assembling tank (40) through handling means of the structure;
- a tenth step of positioning the structure on a trolley/tray, through the handling means of the structure;
**characterized in that** it further provides thin sensors, with integrated batteries, to monitor micro-movements of the glued elements.

2. Process for producing a modular structure (10) according to claim 1, **characterized in that** it comprises, following the first step of 3D-molding the modules (11, 12), a step of positioning, through an automated system, the modules (11, 12) of the structure (10) in corresponding storage trays, so that the modules (11, 12) are suitably oriented for a following step of catching through handling means of the modules (11, 12), and **characterized in that**, in the third step of withdrawing, the modules (11, 12) are withdrawn from the storage tray.

3. Process for producing a modular structure (10) according to claim 1 or 2, **characterized in that** the fourth step of distributing the gluing substance provides for distributing a pre-dosed amount of the gluing substance on the interlocking elements (25, 26) and/or on the surfaces (15, 16) of the modules (11, 12) to be fastened.

4. Process for producing a modular structure (10) according to any one of the previous claims, **characterized in that** it comprises, following the seventh step of pressing/consolidating the modules (11, 12) to be fastened, a step of handling the assembling tank (40) with the structure (10) complete with every sub-part thereof towards the heating/reticulating station for the gluing substance, through handling means of the assembling tank (40).

5. Process for producing a modular structure (10) according to any one of the previous claims, **characterized in that** it comprises, following the tenth step of positioning the structure (10) on a trolley/tray, a step of re-positioning the assembling tank (40), through handling means of the tank (40).

6. Process for producing a modular structure (10) according to any one of the previous claims, **characterized in that** the modular structure (10) is a chassis (10) for motor vehicles.

7. Process for producing a modular structure (10) according to any one of the previous claims, **characterized in that** it provides fort the use up to four robots which work simultaneously on the four sides of the tank (40).

8. Process for producing a modular structure (10) according to any one of the previous claims, **characterized in that** the tank (40) is made in reverse, namely starting to assemble first on the bottom of the tank (40) the upper part of the modular structure (10), then the whole lateral/perimeter structure (10), and finally the lower part of the structure (10), the tank (40) being equal in length and width, but much deeper with respect to the previous one, wherein, at the end of assembling, the structure (10) is overturned.

9. Process for producing a modular structure (10) according to claim 1, **characterized in that** the sensors are glued at the end of assembling in the points of the structure (10) presumably more stresses astride contiguous elements in order to evaluate their relative movements, the sensors, if equipped with alarm, interacting with a driver, or an autonomous drive, to limit the vehicle regarding speed, maximum weight, linear and centrifugal acceleration, in order to contain it within its structural safety limits.

10. Process for producing a modular structure (10) according to any one of the previous claims, **characterized in that** it comprises two tanks (40) in parallel: one for the upper chassis (10) and one for the lower chassis (10), with an additional final operation of assembling of the two macro-portions of chassis (10) which would be joined to the external support of the lower tank (40) only, after having discharged the upper chassis (10) from its tank (40).

11. Chassis (10) for motor vehicles comprising at least one first module (11) and at least one second module (12), the first module (11) having a face with at least one first surface (15) complementary with a second surface (16) of a face of the second module (12), the first and second surfaces (15, 16) respectively comprising first (25) and second (26) interlocking elements, designed to be mutually interlocked to fasten the first module (11) and the second module (12), with the first surface (15) and the second surface (16) mutually abutted, the first surface (15) and the second surface (16) having the same shape and being mutually matching, at least partially, when the first module (11) is fastened to the second module (12) with the first (25) and the second (26) interlocking elements mutually interlocked, and the first (25) and the second (26) interlocking elements being made on a lateral longitudinal surface of the module (11, 12), the first (25) and the second (26) interlocking elements being made with projecting elements and corresponding recesses, made respectively on the first surface (15) and on the second surface (16) of the modules (11, 12), the projecting elements and recesses having a honeycomb profile, **characterized in that** it comprises, as interconnecting items between its own elements, instead of simple interlocking, joints of the key/lock type, where the element with a male end is interlocked with the element with a female end through a translation-rotation of the robot axle when assembling the two elements.

12. Chassis (10) for motor vehicles according to claim 11, **characterized in that** it comprises a plurality of first modules (11) and a plurality of second modules (12), each of the first modules (11) having a face with a first surface (15) complementary with a second surface (16) of a face of at least one of the second modules (12), the first and second surfaces (15, 16) respectively comprising the first (25) and the second (26) interlocking elements, designed to be mutually interlocked to fasten the first module (11) and the second module (12) with the first surface (15) and the second surface (16) mutually abutted.

13. Chassis (10) for motor vehicles according to any one of claims 11 to 12, **characterized in that** the first (25) and the second (26) interlocking elements and/or the first surface (15) and the second surface (16) of the modules (11 and 12) are mutually glued through gluing substances arranged on the surfaces to be joined immediately before assembling the modules (11, 12), and **characterized in that** the modules (11, 12) are designed to be assembled in an assembling tank (40) and are made through 3D printing.

14. Chassis (10) for motor vehicles according to any one of claims 11 to 13, **characterized in that** it comprises, as interconnecting items between its own elements, instead of simple interlocking, tapered joints, always with female on one side and male on another side, with a slight geometric interference of the elements, obtained for example by drawing the tapered male element with at least one, and preferably a plurality of flexible tongues, so that their elasticity is won by a suitable axially exerted pressure by the robot during the assembling stroke of the elements, and, when the axial pressure of the robot stops, after a small rotation, the tongues are elastically engaged in suitable recesses obtained in the building step in the ends of the female element, generating a very solid locking of the interconnection.

15. Module (11, 12) for chassis (10) for motor vehicles according to any one of claims 11 to 14, **characterized in that** it comprises a face with at least one first surface (15) complementary with a second surface (16) of a face of a second module (12), the first and second surfaces (15, 16) respectively comprising first (25) and second (26) interlocking elements, designed to be mutually interlocked to fasten the first module (11) and the second module (12), with the first surface (15) and the second surface (16) mutually abutted, **characterized in that** the first surface (15) and the second surface (16) have the same shape and are mutually matching, at least partially, when the first module (11) is fastened to the second module (12) with the first (25) and the second (26) interlocking elements mutually interlocked, and **in that** the first (25) and the second (26) interlocking elements are made on a lateral longitudinal surface of the module (11, 12).

## Patentansprüche

1. Verfahren zur Herstellung einer modularen Struktur (10) umfassend die folgenden Schritte:
- einen ersten 3D-Druckschritt der Module (11, 12) der Struktur (10) unter Verwendung mindestens eines 3D-Druckers;
- eine zweite Phase der Reinigung und Oberflächenveredelung der Module (11, 12), um Grate und Rückstände von den Formteilen zu entfernen;
- einen dritten Schritt des Aufnehmens der Module (11, 12) und ihres Überführens zu einer Unterstation zum Vorbereiten/Dosieren und Verteilen einer Klebesubstanz mittels Handhabungsmitteln für die Module (11, 12);
- eine vierte Phase der Verteilung des Klebemittels auf Verriegelungselementen (25, 26) und/oder auf Oberflächen (15, 16) der zu befestigenden Module (11, 12) durch Zubereitung/Dosierung und Verteilung desselben Klebesubstanz, wobei die zu befestigenden Module (11, 12) mindestens ein erstes Modul (11) und mindestens ein zweites Modul (12) umfassen, wobei das erste Modul (11) eine Seite mit mindestens einer ersten Oberfläche (15) aufweist komplementär zu einer zweiten Oberfläche (16) einer Fläche des zweiten Moduls (12), wobei die erste und die zweite Oberfläche jeweils erste Verriegelungselemente (25) und zweite Verriegelungselemente (26) umfassen, die dazu bestimmt sind, miteinander verriegelt zu werden, um das erste Modul zu befestigen (11) und das zweite Modul (12), wobei die erste Oberfläche (15) und die zweite Oberfläche (16) aneinander anliegen;
- eine fünfte Phase des Erkennens und Überführens der Module (11, 12) in ihre jeweilige Position innerhalb eines Montagetanks (40) mittels Erkennungsmitteln und Mitteln zum Handhaben der Module (11, 12);
- einen sechsten Schritt des Befestigens der Module (11, 12) an dem Montagebehälter (40) mittels eines Kupplungssystems;
- einen siebten Schritt des Pressens/Konsolidierens der zu befestigenden Module (11, 12) mittels Druckmitteln, die dafür ausgelegt sind, die Oberflächen (15, 16) der zu befestigenden Module (11, 12) zu halten, so dass die jeweiligen Verbindungselemente (25, 26) und/oder Flächen (15, 16) haften aneinander, kleben stabil;
- eine optionale achte Stufe des Erhitzens der modularen Struktur (10) durch Erhitzen/Vernetzen der Klebesubstanz;
- einen neunten Schritt des Abnehmens der modularen Struktur (10) von dem Montagetank (40) durch Bewegen der Struktur;
- einen zehnten Schritt des Positionierens der Struktur auf einem Wagen/Tablett mittels der Mittel zum Bewegen der Struktur;
zeichnet sich dadurch aus, dass es auch dünne Sensoren mit integrierten Batterien enthält, um die Mikrobewegungen der geklebten Elemente zu überwachen.

2. Verfahren zur Herstellung einer modularen Struktur (10) nach Anspruch 1, **dadurch gekennzeichnet, dass** es nach dem ersten Schritt des 3D-Formens der Module (11, 12) einen Positionierungsschritt mittels eines automatisierten Systems umfasst, der Module (11, 12) des Aufbaus (10) in entsprechenden Lagerschalen, so dass die Module (11, 12) für eine nachfolgende Greifphase mittels Handhabungsmitteln für die Module (11, 12) geeignet orientiert sind, **dadurch gekennzeichnet, dass** in der dritten Aufnahmephase die Module (11, 12) von der Ablageschale aufgenommen werden.

3. Verfahren zur Herstellung einer modularen Struktur (10) nach Anspruch 1 oder 2, **dadurch gekennzeichnet, dass** die vierte Phase der Verteilung des Klebemittels das Verteilen einer vorab abgemessenen Menge des Klebemittels auf den Verriegelungselementen vorsieht (25, 26) und/oder an den Oberflächen (15, 16) der Module (11, 12) befestigt werden.

4. Verfahren zur Herstellung einer Modulstruktur (10) nach einem der vorhergehenden Ansprüche, **dadurch gekennzeichnet, dass** es nach dem siebten Schritt des Pressens/Konsolidierens der zu befestigenden Module (11, 12) einen Schritt des Bewegen der Tankanordnung (40) mit der Struktur (10) komplett mit jedem ihrer Unterteile zu der Erwärmungs-/Vernetzungsstation der Klebesubstanz mittels Handhabungsmitteln des Montagetanks (40).

5. Verfahren zur Herstellung einer modularen Struktur (10) nach einem der vorhergehenden Ansprüche, **dadurch gekennzeichnet, dass** es nach dem zehnten Schritt des Positionierens der Struktur (10) auf einem Transportwagen/Tablett einen Schritt des Umpositionierens umfasst Behälteranordnung (40), mittels Bewegungsmitteln des Tanks (40).

6. Verfahren zur Herstellung einer modularen Struktur (10) nach einem der vorhergehenden Ansprüche, **dadurch gekennzeichnet, dass** die modulare Struktur (10) ein Fahrgestell (10) für Kraftfahrzeuge ist.

7. Verfahren zur Herstellung einer modularen Struktur (10) nach einem der vorhergehenden Ansprüche, **dadurch gekennzeichnet, dass** es die Verwendung von bis zu vier Robotern vorsieht, die gleichzeitig an den vier Seiten des Tanks (40) arbeiten.

8. Verfahren zur Herstellung einer modularen Struktur (10) nach einem der vorangehenden Ansprüche, **dadurch gekennzeichnet, dass** der Tank (40) auf den Kopf gestellt wird, d.h. beginnend mit dem Zusammenbau zuerst am Boden des Tanks (40) der oberer Teil der modularen Struktur (10), dann die gesamte Seiten- /Umfangsstruktur (10) und schließlich der untere Teil der Struktur (10), wobei der Tank (40) in Länge und Breite gleich ist, aber viel tiefer als die vorherige, bei der am Ende der Montage die Struktur (10) umgestürzt wird.

9. Verfahren zur Herstellung einer modularen Struktur (10) nach Anspruch 1, **dadurch gekennzeichnet, dass** die Sensoren am Ende der Montage in den Stellen der Struktur (10) vermutlich am stärksten beanspruchten rittlings aneinandergrenzenden Elementen zur Auswertung eingeklebt werden die relativen Bewegungen, die Sensoren, falls mit einem Alarm ausgestattet, die mit einem Fahrer oder einem autonomen Führer interagieren, um das Fahrzeug in Bezug auf Geschwindigkeit, Höchstgewicht, Linear- und Zentrifugalbeschleunigung zu begrenzen, um es innerhalb seiner eigenen strukturellen Sicherheitsgrenzen zu halten.

10. Verfahren zur Herstellung einer modularen Struktur (10) nach einem der vorhergehenden Ansprüche, **dadurch gekennzeichnet, dass** es zwei Wannen (40) parallel umfasst: eine für den oberen Rahmen (10) und eine für den unteren Rahmen (10) mit einem zusätzlichen Endmontagevorgang der beiden Makroabschnitte des Rahmens (10), die nur mit der äußeren Stütze des unteren Tanks (40) verbunden werden sollten, nachdem der obere Rahmen (10) aus seinem Tank entladen wurde (40).

11. Rahmen (10) für Kraftfahrzeuge mit mindestens einem ersten Modul (11) und mindestens einem zweiten Modul (12), wobei das erste Modul (11) eine Fläche mit mindestens einer ersten Oberfläche (15) aufweist, die zu einer zweiten komplementär ist Oberfläche (16) einer Fläche des zweiten Moduls (12), wobei die erste und die zweite Oberfläche (15, 16) jeweils erste (25) und zweite (26) Verriegelungselemente umfassen, die dazu bestimmt sind, miteinander verriegelt zu werden, um das erste Modul (12) zu befestigen (11) und dem zweiten Modul (12), wobei die erste Fläche (15) und die zweite Fläche (16) aneinander anliegen, wobei die erste Fläche (15) und die zweite Fläche (16) die gleiche Form haben und zueinander passen zumindest teilweise, wenn das erste Modul (11) an dem zweiten Modul (12) befestigt ist, wobei das erste (25) und das zweite (26) Verriegelungselement miteinander verriegelt sind, und das erste (25) und das zweite (26) Elemente zu den ersten (25) und den zweiten sind auf einer Längsseitenfläche des Moduls (11, 12) hergestellt. (26) Verriegelungselemente, die mit Reliefelementen und entsprechenden Aussparungen hergestellt sind, die jeweils auf der ersten Oberfläche (15) und auf der zweiten Oberfläche (16) der Module (11, 12) hergestellt sind, wobei die Reliefelemente und die Nuten a Wabe, **dadurch gekennzeichnet, dass** sie als Verbindungselemente zwischen ihren Elementen anstelle eines einfachen Gelenks Gelenke vom Typ Schlüssel/Schloss umfasst, wobei das Element mit einem männlichen Ende mit dem Element mit einem weiblichen Ende mittels a Translations-Rotation der Roboterachse beim Zusammenbau der beiden Elemente.

12. Rahmen (10) für Kraftfahrzeuge nach Anspruch 11, **dadurch gekennzeichnet, dass** er mehrere erste Module (11) und mehrere zweite Module (12) umfasst, wobei jedes der ersten Module (11) eine Fläche mit einer ersten Oberfläche aufweist (15) komplementär zu einer zweiten Oberfläche (16) einer Fläche mindestens eines der zweiten Module (12), wobei die erste und die zweite Oberfläche (15, 16) jeweils das erste (25) und das zweite (26) Element umfassen Verriegelung, die dazu bestimmt ist, verriegelt zu werden, um das erste Modul (11) und das zweite Modul (12) zu fixieren, wobei die erste Fläche (15) und die zweite Fläche (16) zwischen ihnen aufliegen.

13. Fahrzeugchassis (10) nach einem der Ansprüche 11 bis 12, **dadurch gekennzeichnet, dass** die ersten (25) und zweiten (26) Formschlusselemente und/oder die erste Oberfläche (15) und die zweite Oberfläche (16) der Module (11 und 12) unmittelbar vor dem Zusammenbau der Module (11, 12) durch auf den zu verbindenden Flächen angeordnete Klebemittel miteinander verklebt werden, und **dadurch gekennzeichnet, dass** die Module (11, 12) montierbar ausgebildet sind in einem Montagebehälter (40) und werden durch 3D-Druck hergestellt.

14. Rahmen (10) für Kraftfahrzeuge nach einem der Ansprüche 11 bis 13, **dadurch gekennzeichnet, dass** er als Verbindungselemente zwischen seinen Elementen anstelle eines einfachen Gelenks kegelförmige Gelenke umfasst, immer mit weiblichen auf der einen und männlichen auf der anderen Seite. mit einer leichten geometrischen Interferenz der Elemente, die zum Beispiel erhalten wird, indem das sich verjüngende männliche Element mit mindestens einer und vorzugsweise einer Vielzahl von flexiblen Zungen konstruiert wird, so dass ihre Elastizität durch einen Druck überwunden wird, der in geeigneter Weise in einer axialen Richtung durch den Roboter währenddessen ausgeübt wird dem Montagehub der Elemente, und wenn der axiale Druck des Roboters unterbrochen wird, greifen die Laschen nach einer kleinen Drehung elastisch in geeignete Aussparungen ein, die in der Produktionsphase an den Enden des weiblichen Elements erhalten wurden, wodurch eine sehr starke Verriegelung erzeugt wird Zusammenschaltung.

15. Modul (11, 12) für Fahrgestelle (10) für Kraftfahrzeuge nach einem der Ansprüche 11 bis 14, **dadurch gekennzeichnet, dass** es eine Fläche mit mindestens einer ersten Oberfläche (15) umfasst, die komplementär zu einer zweiten Oberfläche (16) a Fläche eines zweiten Moduls (12), wobei die erste und die zweite Fläche (15, 16) jeweils erste (25) und zweite (26) Verriegelungselemente umfassen, die dazu bestimmt sind, miteinander verriegelt zu werden, um das erste Modul (11) und das zweite Modul zu befestigen (12), wobei die erste Fläche (15) und die zweite Fläche (16) aufeinander aufliegen, **dadurch gekennzeichnet, dass** die erste Fläche (15) und die zweite Fläche (16) die gleiche Form haben und zwischen ihnen zusammenpassen , zumindest teilweise, wenn das erste Modul (11) an dem zweiten Modul (12) befestigt ist, wobei das erste (25) und das zweite (26) Verriegelungselement miteinander verriegelt sind, und dadurch, dass das erste (25) und das zweite (26) Verriegelungselemente sind auf einer Längsseitenfläche d hergestellt el-Modul (11, 12).

## Revendications

1. Procédé de réalisation d'une structure modulaire (10) comprenant les étapes suivantes :
- une première étape d'impression 3D des modules (11, 12) de la structure (10), à l'aide d'au moins une imprimante 3D;
- une seconde phase de nettoyage et de finition de surface des modules (11, 12), pour éliminer les bavures et résidus des pièces moulées;
- une troisième étape de ramassage des modules (11, 12) et de leur transfert vers une sous-station de préparation/dosage et distribution d'un produit de collage, au moyen de moyens de manutention des modules (11, 12);
- une quatrième phase de distribution de la substance adhésive sur les éléments d'emboîtement (25, 26) et/ou sur les surfaces (15, 16) des modules (11, 12) à fixer, par préparation/dosage et distribution dudit substance adhésive, les modules (11, 12) à fixer comprenant au moins un premier module (11) et au moins un deuxième module (12), le premier module (11) ayant une face avec au moins une première surface (15) complémentaire d'une seconde surface (16) d'une face du second module (12), les première et seconde surfaces comprenant respectivement des premiers éléments d'emboîtement (25) et des seconds éléments d'emboîtement (26), destinés à être emboîtés ensemble pour fixer le premier module (11) et le second module (12), avec la première surface (15) et la seconde surface (16) reposant ensemble;
- une cinquième phase de reconnaissance et de transfert des modules (11, 12) dans leur position respective au sein d'une cuve d'assemblage (40), au moyen de moyens de reconnaissance et de moyens de manipulation des modules (11, 12);
- une sixième étape de fixation des modules (11, 12) à la cuve d'assemblage (40), au moyen d'un système de couplage;
- une septième étape de pressage/consolidation des modules (11, 12) à fixer, au moyen de moyens de pression destinés à maintenir les surfaces (15, 16) des modules (11, 12) à fixer, de sorte que les les éléments de joint (25, 26) et/ou les surfaces (15, 16) adhèrent les uns aux autres, en se collant de manière stable;
- une huitième étape optionnelle de chauffage de la structure modulaire (10) par chauffage/réticulation de la substance collante;
- une neuvième étape de désolidarisation de la structure modulaire (10) du bac d'assemblage (40) par déplacement de la structure;
- une dixième étape de positionnement de la structure sur un chariot/plateau, au moyen des moyens de déplacement de la structure;
**caractérisé par le fait qu'**il comprend également des capteurs minces, avec des batteries intégrées, pour surveiller les micro-mouvements des éléments collés.

2. Procédé de réalisation d'une structure modulaire (10) selon la revendication 1, **caractérisé en ce qu'**il comprend, suite à la première étape de moulage 3D des modules (11, 12), une étape de positionnement, au moyen d'un système automatisé , des modules (11, 12) de la structure (10) dans des bacs de stockage correspondants, de sorte que les modules (11, 12) soient convenablement orientés pour une phase ultérieure de préhension au moyen de moyens de manutention des modules (11, 12), et **caractérisé en ce que**, dans la troisième phase de prélèvement, les modules (11, 12) sont prélevés du bac de stockage.

3. Procédé de réalisation d'une structure modulaire (10) selon la revendication 1 ou 2, **caractérisé en ce que** la quatrième phase de répartition de la matière collante prévoit la répartition d'une quantité pré-dosée de la matière collante sur les éléments d'emboîtement (25, 26) et/ou sur les surfaces (15, 16) des modules (11, 12) à fixer.

4. Procédé de réalisation d'une structure modulaire (10) selon l'une quelconque des revendications précédentes, **caractérisé en ce qu'**il comprend, après la septième étape de pressage/consolidation des modules (11, 12) à fixer, une étape de déplacer l'ensemble réservoir (40) avec la structure (10) complète avec chacune de ses sous-parties vers le poste de chauffage/réticulation de la substance collante, au moyen de moyens de manutention du réservoir d'assemblage (40).

5. Procédé de réalisation d'une structure modulaire (10) selon l'une quelconque des revendications précédentes, **caractérisé en ce qu'**il comprend, après la dixième étape de positionnement de la structure (10) sur un chariot/plateau, une étape de repositionnement de la ensemble conteneur (40), au moyen de moyens de déplacement de la cuve (40).

6. Procédé de fabrication d'une structure modulaire (10) selon l'une quelconque des revendications précédentes, **caractérisé en ce que** la structure modulaire (10) est un châssis (10) pour véhicule automobile.

7. Procédé de réalisation d'une structure modulaire (10) selon l'une quelconque des revendications précédentes, **caractérisé en ce qu'**il prévoit l'utilisation de jusqu'à quatre robots agissant simultanément sur les quatre côtés de la cuve (40).

8. Procédé de réalisation d'une structure modulaire (10) selon l'une quelconque des revendications précédentes, **caractérisé en ce que** la cuve (40) est réalisée à l'envers, c'est-à-dire en commençant à assembler d'abord sur le fond de la cuve (40) le partie supérieure de la structure modulaire (10), puis toute la structure latérale/périmétrique (10), et enfin la partie inférieure de la structure (10), le réservoir (40) étant de même longueur et largeur, mais beaucoup plus profond que la précédente, dans laquelle, en fin de montage, la structure (10) est renversée.

9. Procédé de réalisation d'une structure modulaire (10) selon la revendication 1, **caractérisé en ce que** les capteurs sont collés en fin d'assemblage aux points de la structure (10) supposés les plus sollicités à cheval sur des éléments contigus afin d'évaluer les mouvements relatifs, les capteurs, s'ils sont équipés d'une alarme, interagissent avec un conducteur, ou un guide autonome, pour limiter le véhicule en termes de vitesse, de poids maximum, d'accélération linéaire et centrifuge, afin de le contenir dans ses propres limites structurelles de sécurité.

10. Procédé de réalisation d'une structure modulaire (10) selon l'une quelconque des revendications précédentes, **caractérisé en ce qu'**il comprend deux bacs (40) en parallèle: un pour le cadre supérieur (10) et un pour le cadre inférieur (10), avec une opération supplémentaire d'assemblage final des deux macro-parties du cadre (10) qui doivent être solidarisées au support externe de la cuve inférieure (40) uniquement, après avoir déchargé le cadre supérieur (10) de sa cuve (40).

11. Châssis (10) pour véhicule automobile comprenant au moins un premier module (11) et au moins un deuxième module (12), le premier module (11) ayant une face avec au moins une première surface (15) complémentaire d'une deuxième surface (16) d'une face du deuxième module (12), les première et deuxième surfaces (15, 16) comprenant respectivement des premier (25) et deuxième (26) éléments d'emboîtement, destinés à être emboîtés entre eux pour fixer le premier module ( 11) et le deuxième module (12), avec la première surface (15) et la deuxième surface (16) reposant l'une sur l'autre, la première surface (15) et la deuxième surface (16) ayant la même forme et se correspondant, au moins partiellement, lorsque le premier module (11) est fixé au deuxième module (12) avec les premier (25) et deuxième (26) éléments d'emboîtement emboîtés, et le premier (25) et le deuxième (26) des éléments aux premiers (25) et aux seconds sont réalisés sur une surface latérale longitudinale du module (11, 12) (26) les éléments d'emboîtement étant réalisés avec des éléments en relief et des évidements correspondants, ménagés respectivement sur la première face (15) et sur la deuxième face (16) des modules (11, 12), les éléments en relief et les rainures présentant un nid d'abeille, **caractérisé en ce qu'**il comporte, comme éléments d'interconnexion entre ses éléments, au lieu d'un simple joint, des joints du type clé/serrure, où l'élément à extrémité mâle est emboîté avec l'élément à extrémité femelle au moyen d'un translation-rotation de l'axe du robot lors de l'assemblage des deux éléments.

12. Châssis (10) pour véhicule automobile selon la revendication 11, **caractérisé en ce qu'** il comprend une pluralité de premiers modules (11) et une pluralité de deuxièmes modules (12), chacun des premiers modules (11) ayant une face avec une première surface (15) complémentaire d'une seconde surface (16) d'une face d'au moins un des seconds modules (12), les première et seconde surfaces (15, 16) comprenant respectivement le premier (25) et le second (26) éléments emboîtement, conçu pour être emboîté pour fixer le premier module (11) et le deuxième module (12) avec la première surface (15) et la deuxième surface (16) reposant entre eux.

13. Châssis de véhicule (10) selon l'une quelconque des revendications 11 à 12, **caractérisé en ce que** les premier (25) et second (26) éléments d'emboîtement et/ou la première face (15) et la seconde face (16) des modules (11 et 12) sont collés ensemble au moyen de substances adhésives disposées sur les surfaces à assembler immédiatement avant l'assemblage des modules (11, 12), et **caractérisés par le fait que** les modules (11, 12) sont destinés à être montés dans une cuve d'assemblage (40) et sont réalisés par impression 3D.

14. Châssis (10) pour véhicules automobiles selon l'une quelconque des revendications 11 à 13, **caractérisé en ce qu'**il comporte, comme éléments d'interconnexion entre ses éléments, au lieu d'un simple joint, des joints tronconiques, toujours femelle d'un côté et mâle de l'autre, avec une légère interférence géométrique des éléments, obtenue par exemple en concevant l'élément mâle tronconique avec au moins une, et de préférence plusieurs pattes flexibles, de sorte que leur élasticité soit vaincue par une pression convenablement exercée dans une direction axiale par le robot lors la course d'assemblage des éléments, et, lorsque la pression axiale du robot est interrompue, après une petite rotation, les pattes sont engagées élastiquement dans des évidements appropriés obtenus en phase de fabrication aux extrémités de l'élément femelle, générant un blocage très fort interconnexion.

15. Module (11, 12) de châssis (10) de véhicule automobile selon l'une quelconque des revendications 11 à 14, **caractérisé en ce qu'**il comprend une face avec au moins une première face (15) complémentaire d'une deuxième face (16) d'un face d'un deuxième module (12), les première et deuxième surfaces (15, 16) comprenant respectivement des premier (25) et deuxième (26) éléments d'emboîtement, destinés à être emboîtés ensemble pour fixer le premier module (11) et le deuxième module (12), avec la première surface (15) et la deuxième surface (16) reposant l'une sur l'autre, **caractérisé par le fait que** la première surface (15) et la deuxième surface (16) ont la même forme et sont accolées entre elles , au moins partiellement, lorsque le premier module (11) est fixé au deuxième module (12) avec les premier (25) et deuxième (26) éléments d'emboîtement emboîtés, et **par le fait que** les premier (25) et deuxième (26) des éléments d'emboîtement sont réalisés sur une surface latérale longitudinale de le module (11, 12).
